# EUROPEAN PATENT APPLICATION

(11) **EP 4 733 739 A1**
(43) Date of publication of application: **29.04.2026**
(21) Application number: 24831787.7
(22) Date of filing: 19.06.2024
(51) Int. Cl.: G01N 1/36, G01N 1/00, G01N 31/00, G01N 31/12

(54) **COATING DEVICE AND PRODUCTION METHOD FOR COATED OBJECT**

(30) Priority: 26.06.2023 JP 2023104170
(71) Applicant: Japan Atomic Energy Agency, Ibaraki 319-1184 (JP)
(72) Inventor: OSAWA, Takahito, Naka-gun, Ibaraki 319-1195 (JP)
(74) Representative: Gleiss Große Schrell und Partner mbB
(86) International application number: PCT/JP2024/022195
(87) International publication number: WO 2025/004925

(57) **Abstract**

Provided is a covering device capable of quickly and easily enveloping a content with a covering material. A covering device 100 is provided with a base portion 110, a longitudinal hole 120 that penetrates the base portion 110, and a lateral hole 130 that penetrates the base portion 110 to an upper end portion of the longitudinal hole 120. The covering device 100 includes a longitudinal shaft 140 inserted into the longitudinal hole 120, a lateral shaft 150 inserted into the lateral hole 130, an upper lid portion 160 that closes an upper end portion of the longitudinal hole 120, and a drive unit 170 that drives the lateral shaft 150 and the longitudinal shaft 140 in respective axial directions.

## Description

### Technical Field

The disclosure relates to a covering device and a producing method for a covered object.

### Background Art

Conventionally, an elemental analyzer used for radiocarbon dating is known. For example, the elemental analyzer is configured to include a sample combustor and a combustion gas separator, in which the sample combustor blows high-purity oxygen into a quartz pipe which makes high-purity helium carrier gas flow thereinto and is heated at about 900°C, along with a sample enclosed with a tin foil to combust the sample to be used for carbon dating (see paragraph 0041 in Patent Literature below).

### Citation List

### Patent Literature

Patent Literature 1: JP 2016-519755 A

### Summary of Invention

### Technical Problem

A measurer who performs the radiocarbon dating needs to manually envelop a sample to be combusted by the sample combustor of the elemental analyzer with a tinfoil using tweezers. More specifically, the measurer stores the sample as a content in a container-shaped covering material of tinfoil having an opening at an upper end. Next, the measurer closes the opening of the covering material in which the content is stored by pinching with the tweezers, and crushes the covering material with the closed opening from above with the tweezers to form it in a flat shape.

Then, the measurer folds the covering material that stores the content and is formed in the flat shape as described above multiple times using the tweezers while changing the direction, and crushes the folded covering material from both sides and above to shape the covering material. The sequence of works to produce a covered object in which the sample as a content is enveloped with the tinfoil as a covering material takes a long time for the works and requires proficiency of the measurer. Not just for the radiocarbon dating, when an elemental analysis is performed, it is necessary to produce several dozen covered objects for one measurement, which requires a great deal of time and effort.

In consideration of the above-described problems, this disclosure provides a covering device and a producing method for a covered object capable of quickly and easily enveloping a content with a covering material.

### Solution to Problem

One aspect of the disclosure is a covering device that envelops a content with a container-shaped covering material having an opening at an upper end. The covering device comprises a base portion, a longitudinal hole that penetrates the base portion in a longitudinal direction, a lateral hole that penetrates the base portion to an upper end portion of the longitudinal hole in a lateral direction, a longitudinal shaft inserted into the longitudinal hole from a lower side of the base portion, a lateral shaft inserted into the lateral hole from a side portion of the base portion, an upper lid portion placed on the base portion to close the upper end portion of the longitudinal hole, and a drive unit that drives the lateral shaft and the longitudinal shaft in respective axial directions.

The one aspect of the disclosure can provide the covering device capable of quickly and easily enveloping a content with a covering material. In more detail, in a state where the content is housed in the container-shaped covering material having the opening at the upper end, the covering material is arranged at the upper end portion of the longitudinal hole of the base portion, and the bottom portion of the covering material is opposed to the distal end of the longitudinal shaft. Next, the drive unit axially drives the lateral shaft toward the covering material arranged at the upper end portion of the longitudinal hole, the opening at the upper end of the covering material is crushed to be closed between the distal end portion of the lateral shaft and the inner wall of the longitudinal hole, and the drive unit drives the lateral shaft in the opposite direction to return the lateral shaft to the original position. Furthermore, by axially driving the longitudinal shaft toward the covering material with the drive unit to compress the covering material in which the content is housed and the opening portion is closed between the distal end portion of the longitudinal shaft and the upper lid portion, the content can be enveloped with the covering material. Accordingly, the one aspect of the disclosure can provide the covering device capable of quickly and easily enveloping a content with a covering material.

Another aspect of the disclosure is a producing method for the covered object in which the content is enveloped with the covering material using the above-described covering device. The method comprises: a closing step of driving the lateral shaft toward the covering material in a state where the covering material is arranged in the longitudinal hole and the content is housed in the covering material to compress and close the opening of the covering material between the lateral shaft and an inner wall of the longitudinal hole; and a covering step of driving the longitudinal shaft toward the covering material in a state where the opening of the covering material is closed to compress the covering material between the longitudinal shaft and the upper lid portion and envelop the content with the covering material.

The other aspect of the disclosure can provide the producing method for the covered object capable of quickly and easily enveloping a content with a covering material. In more detail, in the closing step, in a state where the content is housed in the container-shaped covering material having the opening at the upper end, the covering material is arranged at the upper end portion of the longitudinal hole of the base portion, and the bottom portion of the covering material is opposed to the distal end of the longitudinal shaft. Then, the drive unit axially drives the lateral shaft toward the covering material arranged at the upper end portion of the longitudinal hole, the opening at the upper end of the covering material is crushed to be closed between the distal end portion of the lateral shaft and the inner wall of the longitudinal hole, and the drive unit drives the lateral shaft in the opposite direction to return the lateral shaft to the original position. Next, in the covering step, by axially driving the longitudinal shaft toward the covering material with the drive unit to compress the covering material in which the content is housed and the opening portion is closed between the distal end portion of the longitudinal shaft and the upper lid portion, the content can be enveloped with the covering material CM. Accordingly, the other aspect of the disclosure can provide the producing method for the covered object capable of quickly and easily enveloping a content with a covering material.

### Advantageous Effects of Invention

According to the aspects of the disclosure, the covering device and the producing method for the covered object capable of quickly and easily enveloping a content with a covering material can be provided.

### Brief Description of Drawings

Fig. 1 is a front view illustrating an embodiment of a covering device according to the disclosure.
Fig. 2 is a back view of the covering device of Fig. 1.
Fig. 3 is a top view of the covering device of Fig. 1.
Fig. 4 is a right side view illustrating an internal structure of a housing of the covering device of Fig. 1.
Fig. 5 is a perspective view illustrating a base portion and an upper lid portion of the covering device of Fig. 1.
Fig. 6 is an enlarged cross-sectional view of the covering device along a line VI-VI of Fig. 3.
Fig. 7 is a block diagram illustrating a control unit of the covering device of Fig. 1.
Fig. 8 is a flowchart illustrating an embodiment of a producing method for a covered object according to the disclosure.
Fig. 9A is an enlarged cross-sectional view of the covering device describing an arrangement step of Fig. 8.
Fig. 9B is an enlarged cross-sectional view of the covering device describing an air exhaust step of Fig. 8.
Fig. 9C is an enlarged cross-sectional view of the covering device describing a closing step of Fig. 8.
Fig. 9D is an enlarged cross-sectional view of the covering device describing a covering step and an air supply step of Fig. 8.
Fig. 9E is an enlarged cross-sectional view of the covering device describing an extracting step of Fig. 8.
Fig. 10 is a front view illustrating another embodiment of the covering device according to the disclosure.
Fig. 11 is a top view of a washing mechanism when viewed in a direction A of Fig. 10.
Fig. 12 is a side view of the washing mechanism when viewed in a direction B of Fig. 10.
Fig. 13 is a flowchart illustrating an embodiment of a washing method for the covering device according to the disclosure.

### Description of Embodiments

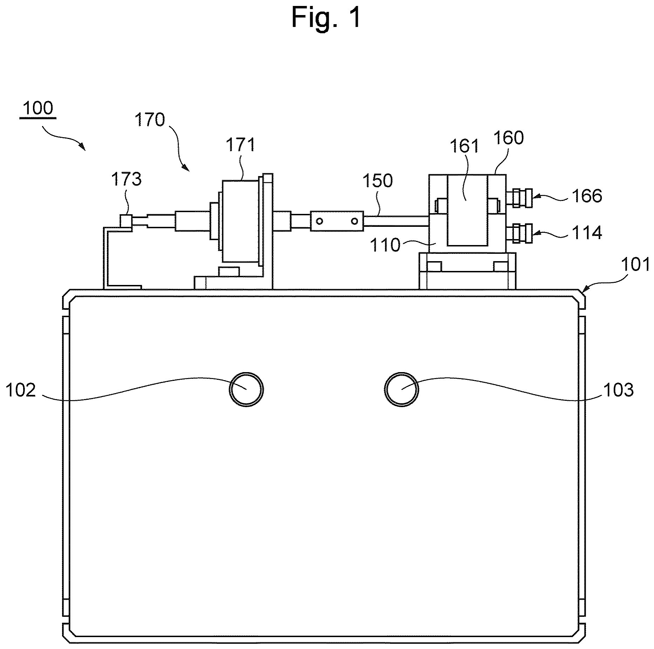

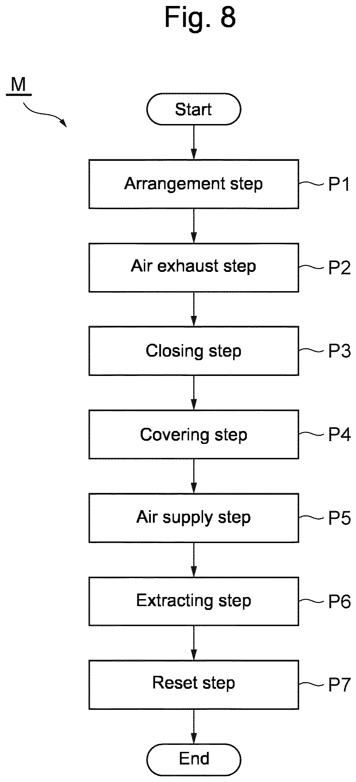

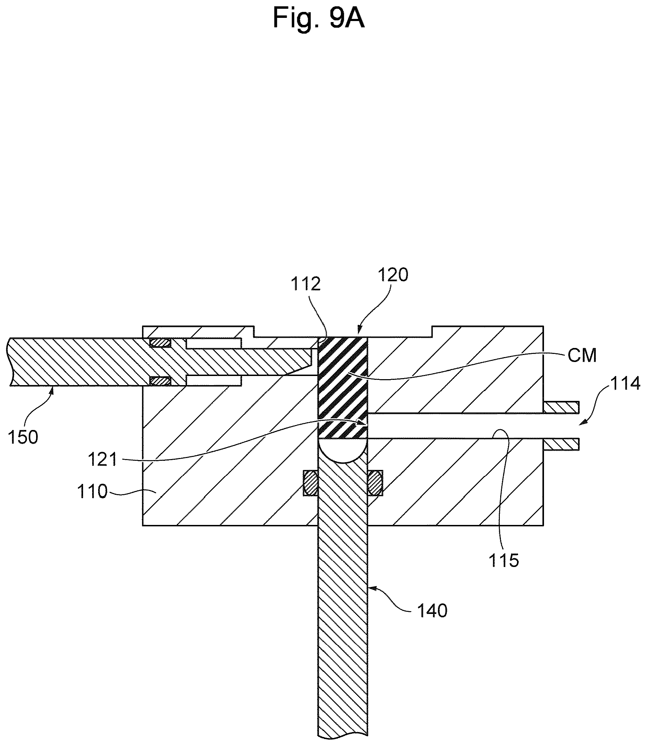

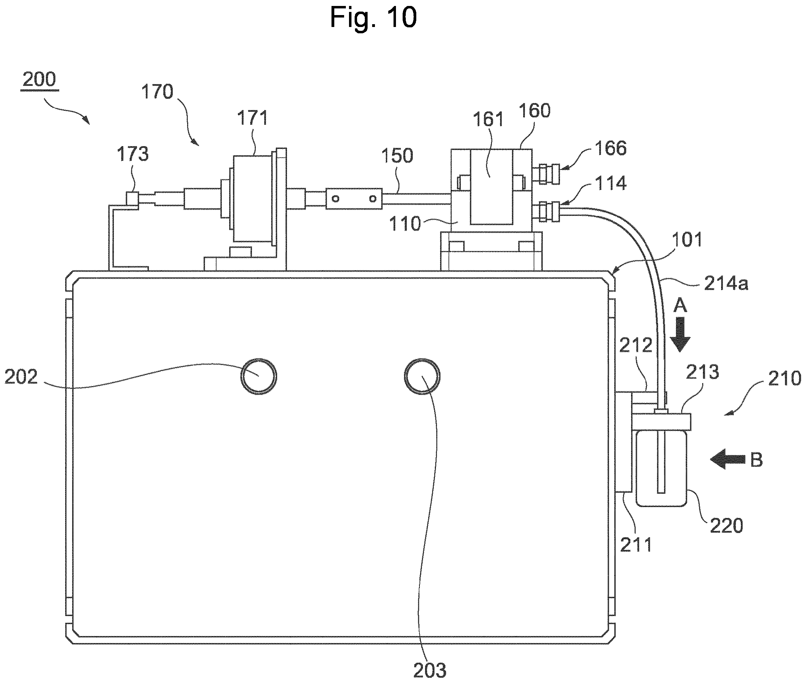

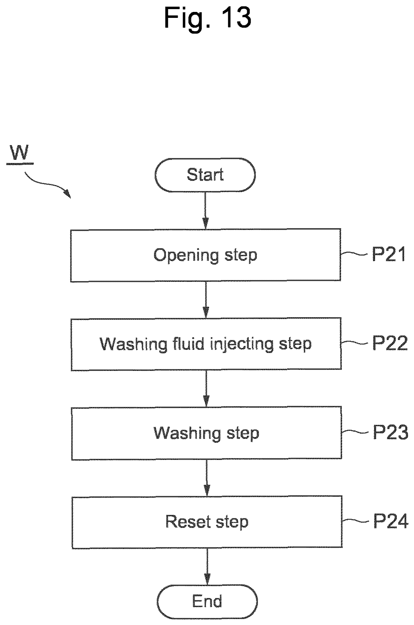

The following describes an embodiment of a covering device according to the disclosure with reference to Fig. 1 to Fig. 7 first, and subsequently, describes an embodiment of a producing method for a covered object according to the disclosure with reference to Fig. 8 and Fig. 9A to Fig. 9E. Furthermore, another embodiment of the covering device according to the disclosure is described with reference to Fig. 10 to Fig. 12, and subsequently, an embodiment of a washing method of the covering device according to the disclosure is described with reference to Fig. 13.

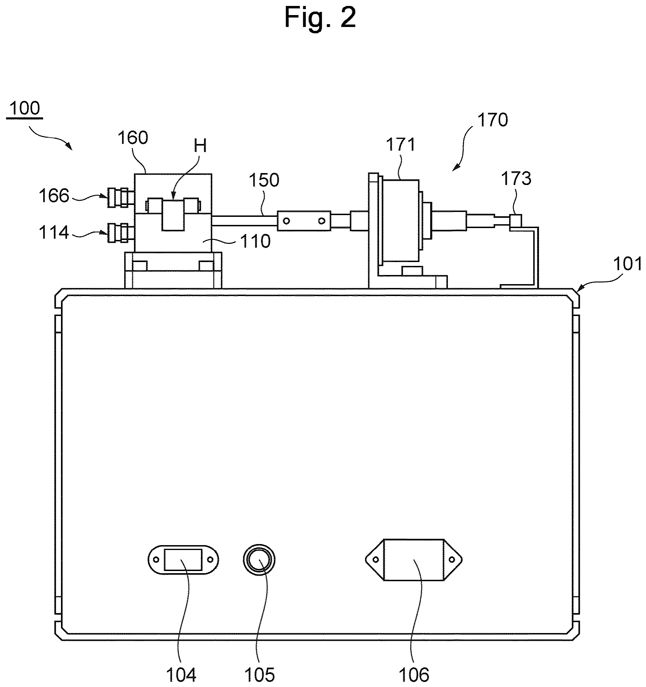

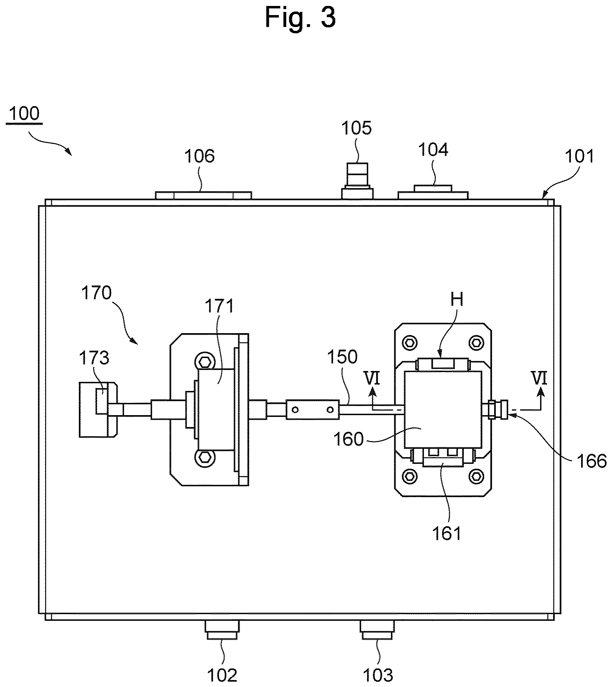

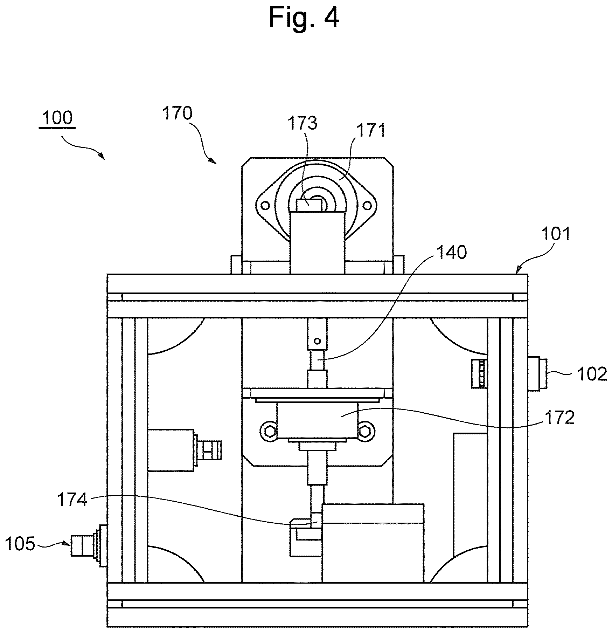

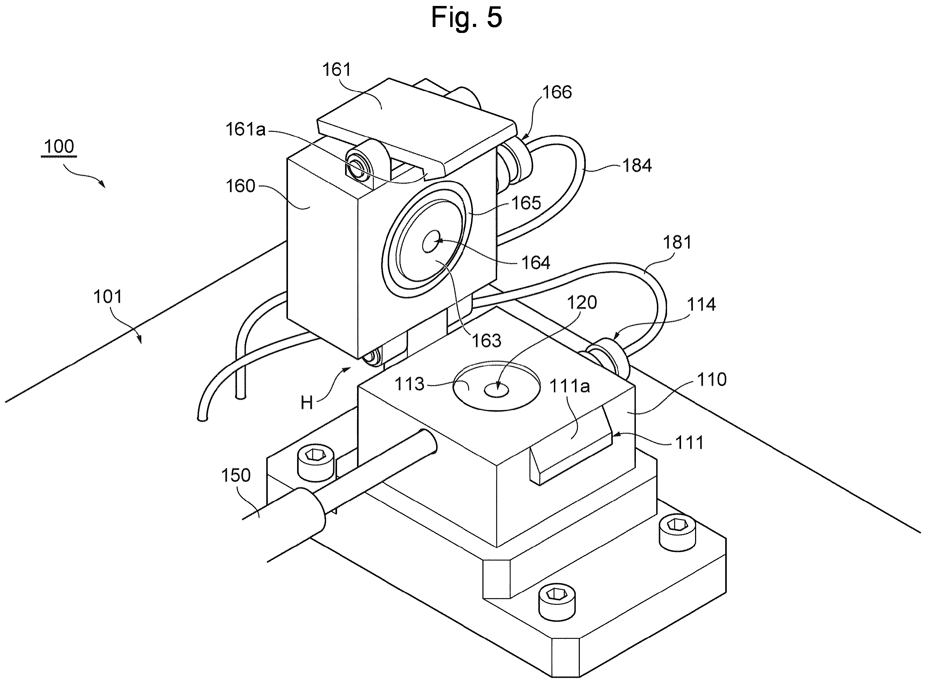

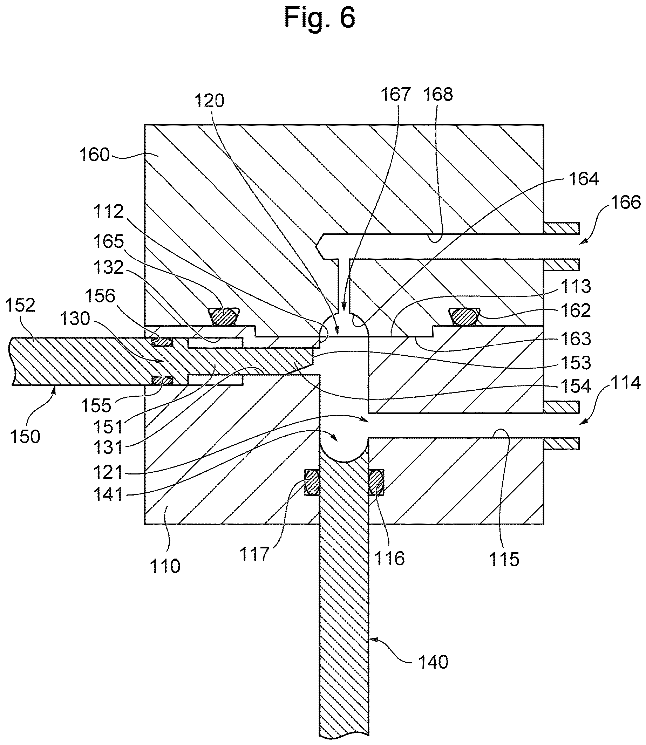

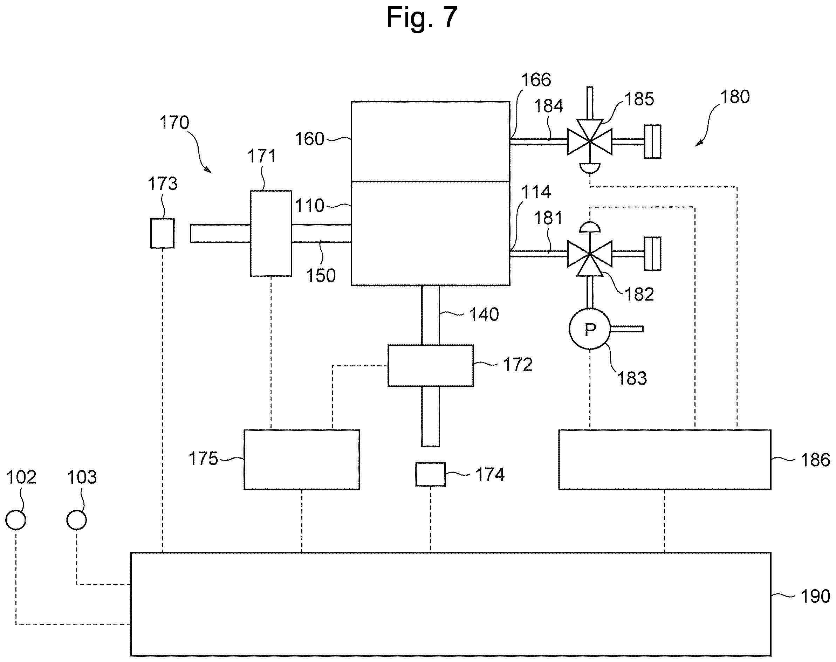

Fig. 1 is a front view illustrating an embodiment of a covering device according to the disclosure. Fig. 2 and Fig. 3 are back view and top view of a covering device 100 of Fig. 1, respectively. Fig. 4 is a right side view illustrating an internal structure of a housing of the covering device 100 of Fig. 1. Fig. 5 is a perspective view illustrating a base portion 110 and an upper lid portion 160 of the covering device 100 of Fig. 1. Fig. 6 is an enlarged cross-sectional view of the covering device 100 along the line IV-IV of Fig. 3. Fig. 7 is a block diagram illustrating a control unit 190 of the covering device 100 of Fig. 1.

The covering device 100 of the embodiment is, for example, a device that envelops a content with a covering material CM (see Fig. 9A) to produce a covered object in which the content is covered with the covering material CM. The following describes a case where the content is a sample on which radiocarbon dating is performed and the covering material CM is a container-shaped tinfoil with an opening at an upper end, but the content and the covering material CM are not limited thereto. The term "cover" can be replaced with a term, for example, "envelop," "embed," "imbed," or "contain."

The covering device 100 of the embodiment is provided with, for example, the base portion 110, a longitudinal hole 120, a lateral hole 130, a longitudinal shaft 140, a lateral shaft 150, the upper lid portion 160, and a drive unit 170. The base portion 110 is, for example, a metallic member having an approximately rectangular parallelepiped shape, and constitutes a base of a main structure of the covering device 100 that envelops a content with a covering material CM. The longitudinal hole 120 penetrates the base portion 110 in a longitudinal direction, and the lateral hole 130 penetrates the base portion 110 to an upper end portion of the longitudinal hole 120 in a lateral direction.

In the embodiment, the longitudinal direction is a direction approximately parallel to the vertical direction, and the lateral direction is a direction approximately parallel to the horizontal direction. However, the longitudinal direction and the lateral direction may be inclined with respect to the vertical direction and the horizontal direction in predetermined angle ranges, respectively. Here, the predetermined angle ranges in which the longitudinal direction and the lateral direction incline with respect to the vertical direction and the horizontal direction are, for example, angle ranges of 45° or less.

The longitudinal shaft 140 is inserted into the longitudinal hole 120 from a lower side of the base portion 110. The longitudinal hole 120 is, for example, a cylindrical-shaped circular hole, the longitudinal shaft 140 inserted into the longitudinal hole 120 has a distal end portion, for example, in a columnar shape corresponding to the shape of the longitudinal hole 120. The longitudinal shaft 140 can be moved in an axial direction by the drive unit 170 described later. For example, as illustrated in Fig. 6, the longitudinal hole 120 forms a cylindrical or columnar space, in which a closed-bottomed cylindrical covering material CM with an opening at an upper end can be arranged, together with the distal end of the longitudinal shaft 140 in a state where the longitudinal shaft 140 is most retreated downward in the axial direction.

For example, as illustrated in Fig. 6, the longitudinal shaft 140 is provided with a recessed portion 141 at the distal end. The recessed portion 141 has an inner wall surface, for example, in a shape of a hemisphere surface with a circular opening at an upper end. For example, in the state where the longitudinal shaft 140 is most retreated downward, a sealing member 117, such as an O-ring, provided at a groove 116 of the base portion 110 airtightly seals between an outer peripheral surface below the distal end and an inner wall of the longitudinal hole 120.

The lateral shaft 150 is inserted into the lateral hole 130 from a side portion of the base portion 110. In the lateral shaft 150, a distal end portion 151 opposed to the covering material CM has a tapered shape thinner than a base end portion 152 at the opposite side of the distal end portion 151. In more detail, the distal end portion 151 of the lateral shaft 150 has a dimension in the longitudinal direction, for example, smaller than a dimension in the longitudinal direction of the base end portion 152 of the lateral shaft 150. A distal end portion 131 of the lateral hole 130 through which the distal end portion 151 of the lateral shaft 150 is inserted has a dimension in the longitudinal direction, for example, smaller than a dimension in the longitudinal direction of a base end portion 132 of the lateral hole 130 through which the base end portion 152 of the lateral shaft 150 is inserted.

In a cross-sectional surface perpendicular to the axial direction of the lateral shaft 150, the distal end portion 151 of the lateral shaft 150 has a rectangular cross-sectional shape, for example, with a long side in the lateral direction having a length approximately equal to a diameter of the base end portion 152 of the lateral shaft 150 and a short side in the longitudinal direction shorter than the diameter of the base end portion 152 of the lateral shaft 150. A planar shape of the distal end of the lateral shaft 150 when viewed in the axial direction of the longitudinal hole 120 and the longitudinal shaft 140 is, for example, a semicircular shape projecting toward the inner wall of the longitudinal hole 120.

For example, the lateral shaft 150 has a distal end surface 153 parallel to the inner wall of the longitudinal hole 120 and a tapered portion 154 adjacent to the distal end surface 153. The distal end surface 153 of the lateral shaft 150 is, for example, a semicylindrical surface having a radius approximately equal to a radius of the longitudinal hole 120, and opposed to the inner wall of the cylindrical longitudinal hole 120. The tapered portion 154 is provided with an inclined surface at a lower end in the longitudinal direction, and has a dimension in the longitudinal direction decreasing as approaching the distal end surface 153 in the lateral direction. In other words, in the tapered portion 154, a distance between a lower end of the distal end surface 153 and a lower end of the distal end portion 151 in the longitudinal direction decreases as approaching the distal end surface 153 in the axial direction of the lateral shaft 150.

A lower surface of the tapered portion 154 of the lateral shaft 150 may be a flat inclined surface, or may be a curved surface projecting toward the lower side. Corners between the lower surface of the tapered portion 154 of the lateral shaft 150 and the distal end surface 153, the lower end surface of the distal end portion 151 of the lateral shaft 150 may be chamfered or rounded. The distal end portion 151 of the lateral shaft 150 does not need to have the rectangular cross-sectional shape or the tapered portion 154. The distal end portion 151 of the lateral shaft 150, for example, may have a columnar shape, and corners of the distal end of the lateral shaft 150 may be rounded.

The lateral shaft 150 is, for example, provided with a recessed groove 156 in which a sealing member 155, such as an O-ring, is disposed at an outer peripheral surface in the distal end side of the base end portion 152. Accordingly, for example, as illustrated in Fig. 6, in a state where the lateral shaft 150 is most retreated toward the outside of the base portion 110, the sealing member 155 airtightly seals between the outer peripheral surface of the base end portion 152 of the lateral shaft 150 and the inner wall of the base end portion 132 of the lateral hole 130.

The upper lid portion 160 is placed on the base portion 110 and closes the upper end portion of the longitudinal hole 120. For example, as illustrated in Fig. 5, the upper lid portion 160 is connected to one side of the upper end portion of the base portion 110 via a hinge H, and opens and closes an upper end surface of the base portion 110. At an end portion in the opposite side of one end of the upper lid portion 160 connected to the one side of the upper end portion of the base portion 110, a stopper 161 is turnably attached via a rotary shaft. At a distal end portion of the stopper 161, for example, a claw portion 161a is provided. On the other hand, at an upper end portion of a side surface of the base portion 110 in the opposite side of the one side at which the hinge H is disposed, a projection portion 111 is provided. The projection portion 111 on the side surface of the base portion 110 has an inclined surface 111a with a height from the side surface increasing as approaching the lower side.

The upper lid portion 160 is closed by, for example, turning the end portion at which the stopper 161 is provided downward around the hinge H from the open state illustrated in Fig. 5. At this time, the claw portion 161a at the distal end of the stopper 161 is guided toward the lower side and the outside of the base portion 110 along the inclined surface 111a of the projection portion 111, and when guided beyond the inclined surface 111a, the claw portion 161a turns toward the inside of the base portion 110 around the rotary shaft attached to the upper lid portion 160 and is engaged with a lower end surface of the wedge-shaped projection portion 111. Thus, the upper lid portion 160 is secured to the base portion 110 in a state where the lower end surface of the upper lid portion 160 is opposed to the upper end surface of the base portion 110, and the upper end of the base portion 110 is closed by the upper lid portion 160.

Meanwhile, when opening the upper lid portion 160, the stopper 161 is rotated around the rotary shaft while lifting the lower end portion of the stopper 161 toward the outside and the upper side of the base portion 110, thereby releasing the engagement of the claw portion 161a of the stopper 161 with the projection portion 111 of the base portion 110. Simultaneously, by turning the upper lid portion 160 around the hinge H while lifting the end portion of the upper lid portion 160 at which the stopper 161 is attached upward, the upper lid portion 160 can be opened as illustrated in Fig. 5.

For example, as illustrated in Fig. 6, the base portion 110 includes an outer periphery support surface 112 that supports an outer peripheral surface of an upper end of the closed-bottomed cylindrical covering material CM with the opening at the upper end (see Fig. 9A) between the opening at the upper end of the longitudinal hole 120 and the opening of the lateral hole 130 at the inner wall of the longitudinal hole 120. In a state where the covering material CM is arranged in the longitudinal hole 120, a height position of the upper end of the outer periphery support surface 112 is approximately same as a height position of the upper end of the covering material CM. A height dimension of the outer periphery support surface 112 in the longitudinal direction is preferably decreased as much as possible in a range in which a mechanical strength of a part having a smallest thickness between the lateral hole 130 and the upper surface of the base portion 110 is sufficiently ensured.

The base portion 110 is, for example, provided with a recessed portion 113 in a surface opposed to the upper lid portion 160. For example, as illustrated in Fig. 5, the recessed portion 113 is provided at the center of the upper surface of the base portion 110, has a circular shape in plan view, and has a flat bottom surface. For example, the opening at the upper end of the longitudinal hole 120 opens at the center of the bottom surface of the recessed portion 113. For example, as illustrated in Fig. 5 and Fig. 6, the upper lid portion 160 is provided with an annular groove 162, a circular projecting portion 163, and an upper lid recessed portion 164 at a surface opposed to the base portion 110.

A sealing member 165, such as an O-ring, is disposed at the circular groove 162 of the upper lid portion 160, and airtightly seals between the lower end surface of the upper lid portion 160 and the upper end surface of the base portion 110. The projecting portion 163 of the upper lid portion 160 is, for example, provided at the inside of the circular groove 162 corresponding to the recessed portion 113 of the base portion 110 in position, shape, and dimension, and is fitted to the recessed portion 113 of the base portion 110. For example, the upper lid recessed portion 164 is a recessed portion in a hemispherical shape provided at the center of the projecting portion 163.

The covering device 100 of the embodiment further includes, for example, as illustrated in Fig. 6 and Fig. 7, an exhaust port 114 that is open at the outer surface of the base portion 110 and connected to a vacuum pump 183, an exhaust outlet 121 opening at the inner wall of the longitudinal hole 120, and an exhaust passage 115 that connects the exhaust port 114 and the exhaust outlet 121. The covering device 100 of the embodiment further includes, for example, an air supply port 166 opening at the outer surface of the upper lid portion 160, an air inlet 167 opening at a surface opposed to the longitudinal hole 120 of the upper lid portion 160, and an air supply passage 168 that connects the air supply port 166 and the air inlet 167. The air inlet 167 of the upper lid portion 160 opens at, for example, a bottom portion of the upper lid recessed portion 164 in the hemispherical shape.

The exhaust outlet 121 opens at the inner wall of the longitudinal hole 120, for example, as illustrated in Fig. 6, such that an opening edge in the lower side is adjacent to an upper side of the upper end of the longitudinal shaft 140 in the state where the longitudinal shaft 140 inside the longitudinal hole 120 is most retreated downward. The exhaust outlet 121 is positioned, for example, in the lower side with respect to the distal end surface 153 of the lateral shaft 150 in contact with the inner wall of the longitudinal hole 120 in the longitudinal direction. Note that it is only necessary that, for example, at the inner wall of the longitudinal hole 120, the exhaust outlet 121 opens in the lower side with respect to the opening of the upper end of the covering material CM when the closed-bottomed cylindrical covering material CM is arranged in the longitudinal hole 120, and opens in the upper side with respect to the distal end of the longitudinal shaft 140 in the state where the longitudinal shaft 140 is most retreated downward.

The drive unit 170 drives the lateral shaft 150 and the longitudinal shaft 140 in respective axial directions. The drive unit 170 includes, for example, a lateral actuator 171 that axially drives the lateral shaft 150, a longitudinal actuator 172 that drives the longitudinal shaft 140 in the longitudinal direction, and a motor driver 175. For the lateral actuator 171 and the longitudinal actuator 172, for example, a linear actuator manufactured by Portescap can be used.

The drive unit 170 includes, for example, a lateral limit switch 173 and a longitudinal limit switch 174. For example, the lateral limit switch 173 is disposed to be opposed to the base end of the lateral shaft 150 in the opposite side of the distal end of the lateral shaft 150 inserted into the lateral hole 130, and detects a contact with the base end of the lateral shaft 150 when the lateral shaft 150 is most retreated toward the outside of the base portion 110 in the axial direction. For example, the longitudinal limit switch 174 is disposed to be opposed to the base end of the longitudinal shaft 140 in the opposite side of the distal end of the longitudinal shaft 140 inserted into the longitudinal hole 120, and detects a contact with the base end of the longitudinal shaft 140 when the longitudinal shaft 140 is most retreated downward in the axial direction.

The covering device 100 of the embodiment includes, for example, as illustrated in Fig. 7, an intake and exhaust system 180. The intake and exhaust system 180 includes, for example, an exhaust pipe 181, an exhaust control valve 182, the vacuum pump 183, an air supply pipe 184, an air supply control valve 185, and a solid state relay 186. The exhaust pipe 181 is, for example, a tube connected to the exhaust port 114 opening at the side surface of the base portion 110. The exhaust control valve 182 is, for example, a three-way valve that is driven by a control command and configured to switch between a passage connected to the vacuum pump 183 and a closed passage.

The vacuum pump 183 is, for example, driven by a control command to suck air from the exhaust port 114 via the exhaust control valve 182 and the exhaust pipe 181. The air supply pipe 184 is, for example, a tube connected to the air supply port 166 opening at the side surface of the upper lid portion 160. The air supply control valve 185 is, for example, a three-way valve that is driven by a control command and configured to switch between a closed passage and a passage open to the air.

The covering device 100 of the embodiment further includes, for example, as illustrated in Fig. 7, the control unit 190 that controls the drive unit 170 and the intake and exhaust system 180. The control unit 190 is, for example, configured of one or more microcontrollers. For example, the control unit 190 controls the lateral actuator 171 and the longitudinal actuator 172 via the motor driver 175, and controls the vacuum pump 183, the exhaust control valve 182, and the air supply control valve 185 via the solid state relay 186.

The covering device 100 of the embodiment further includes, for example, as illustrated in Fig. 1, a housing 101 that supports the base portion 110, and a start switch 102 and a reset switch 103 provided at the housing 101. For example, the housing 101 may house the vacuum pump 183. As illustrated in Fig. 2, at a back surface of the housing 101, for example, an outlet 104 for the vacuum pump, a vacuum drawing port 105, and an inlet 106 for an external power supply are provided.

For example, by connecting the inlet 106 for an external power supply to an AC power supply of 100V, electric power is supplied to the drive unit 170, the intake and exhaust system 180, the control unit 190, and the like. The outlet 104 for the vacuum pump and the vacuum drawing port 105 are used, for example, when the vacuum pump 183 is installed outside the housing 101. Specifically, a power to drive the vacuum pump 183 installed outside the housing 101 can be supplied from the outlet 104 for the vacuum pump, and the tube of the vacuum pump 183 installed outside the housing 101 is connected to the vacuum drawing port 105.

As illustrated in Fig. 4, the housing 101 internally houses the motor driver 175, the solid state relay 186, the control unit 190, the vacuum pump 183, and the like illustrated in Fig. 7 in addition to the longitudinal actuator 172, the longitudinal limit switch 174, and the like. The start switch 102, the reset switch 103, the lateral limit switch 173, and the longitudinal limit switch 174 are each connected to the control unit 190.

As illustrated in Fig. 7, for example, the control unit 190 is connected to the motor driver 175 and the solid state relay 186. For example, the motor driver 175 is connected to the lateral actuator 171 and the longitudinal actuator 172. For example, the solid state relay 186 is connected to the exhaust control valve 182, the air supply control valve 185, and the vacuum pump 183.

The control unit 190 controls the drive unit 170 in a manner of driving the lateral shaft 150 toward the covering material CM in a state where the covering material CM is arranged in the longitudinal hole 120 and the content is housed in the covering material CM to compress and close the opening of the covering material CM between the lateral shaft 150 and the inner wall of the longitudinal hole 120. The control unit 190 controls the drive unit 170 in a manner of driving the longitudinal shaft 140 toward the covering material CM in a state where the opening of the covering material CM is closed to compress the covering material CM between the longitudinal shaft 140 and the upper lid portion 160 and envelop the content with the covering material CM.

Next, an operation of the above-described covering device 100 and an embodiment of a producing method for a covered object according to the disclosure are described with reference to Fig. 8 and Fig. 9A to Fig. 9E. Fig. 8 is a flowchart illustrating an embodiment of a producing method for a covered object according to the disclosure. A producing method M for a covered object of the embodiment is, for example, a producing method for a covered object in which a content is enveloped with the covering material CM using the covering device 100.

The producing method M for a covered object of the embodiment includes at least a closing step P3 and a covering step P4 as illustrated in Fig. 8. For example, the producing method M for a covered object may further include an air exhaust step P2, and may further include an air supply step P5. For example the producing method M for a covered object may further include an arrangement step P1, an extracting step P6, and a reset step P7.

Fig. 9A is an enlarged cross-sectional view of the covering device 100 corresponding to Fig. 6 for describing the arrangement step P1 of Fig. 8. When the producing method M for a covered object of the embodiment illustrated in Fig. 8 is started, first, the arrangement step P1 is performed. In the arrangement step P1, for example, as illustrated in Fig. 9A, in a state where the upper lid portion 160 is opened and the upper surface of the base portion 110 is exposed, the covering material CM is housed in the longitudinal hole 120 from the opening at the upper end of the longitudinal hole 120 to arrange the covering material CM at the upper end portion of the longitudinal hole 120.

Here, for the covering material CM, for example, a material having plasticity is used. More specifically, the material of the covering material CM is, for example, a metal foil, and in this embodiment, a tinfoil. For the covering material CM, for example, one formed in a closed-bottomed cylindrical shape with an opening at an upper end is used. In this embodiment, the shape of the covering material CM is a closed-bottomed circular cylindrical shape with an opening at an upper end, and a space for housing a content is provided inside.

The content is not especially limited insofar as a substance can be subjected to an elemental analysis, and in this embodiment, the content is, for example, a sample of an organic matter that is subjected to radiocarbon dating. The covering material CM may be arranged in the longitudinal hole 120 in a state where the content is housed, or the content may be housed after the covering material CM is arranged in the longitudinal hole 120. Performing the arrangement step P1 can provide the state where the covering material CM is arranged in the longitudinal hole 120 and the content is housed in the covering material CM.

Here, a distance from the opening at the upper end of the longitudinal hole 120 to the distal end of the longitudinal shaft 140 is approximately equal to a height of the covering material CM in the longitudinal direction. Therefore, the distal end of the longitudinal shaft 140 supports the bottom portion of the covering material CM, and the height position of the upper end of the covering material CM is approximately same as the height position of the opening at the upper end of the longitudinal hole 120. The outer periphery support surface 112 of the base portion 110 as the upper end portion of the inner wall of the longitudinal hole 120 supports the peripheral area of the opening at the upper end of the covering material CM.

As described above, the covering device 100 of the embodiment includes the exhaust port 114 that is open at the outer surface of the base portion 110 and connected to the vacuum pump 183, the exhaust outlet 121 opening at the inner wall of the longitudinal hole 120, and the exhaust passage 115 that connects the exhaust port 114 and the exhaust outlet 121. In this case, after the end of the arrangement step P1, for example, the air exhaust step P2 below can be performed.

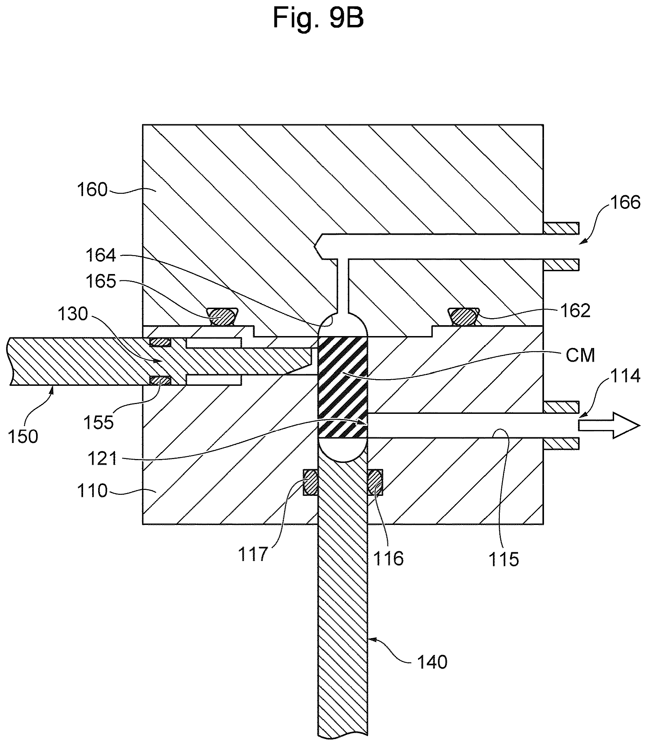

Fig. 9B is an enlarged cross-sectional view of the covering device 100 corresponding to Fig. 6 for describing the air exhaust step P2 of Fig. 8. The air exhaust step P2 is a step of exhausting air from the exhaust port 114 opening at the outer surface of the base portion 110 via the exhaust passage 115 connecting the exhaust port 114 and the exhaust outlet 121 opening at the inner wall of the longitudinal hole 120 before the closing step P3. In the air exhaust step P2, for example, first, the upper lid portion 160 is closed, and the stopper 161 is engaged with the projection portion 111 of the base portion 110. Accordingly, the sealing member 165 disposed in the groove 162 of the upper lid portion 160 is pressed against the upper surface of the base portion 110, thereby airtightly sealing between the lower surface of the upper lid portion 160 and the upper surface of the base portion 110.

The sealing member 155 disposed in the recessed groove 156 of the lateral shaft 150 airtightly seals between the outer peripheral surface of the lateral shaft 150 and the inner wall of the lateral hole 130. The sealing member 117 disposed in the groove 116 of the base portion 110 airtightly seals between the outer peripheral surface of the longitudinal shaft 140 and the inner wall of the longitudinal hole 120. The opening at the lower end of the upper lid recessed portion 164 of the upper lid portion 160 is connected to the opening at the upper end of the longitudinal hole 120 to be flush without a level difference.

Furthermore, the exhaust outlet 121 connected to the exhaust port 114 via the exhaust passage 115 opens at the inner wall of the longitudinal hole 120 at a position in the lower side with respect to the opening at the upper end of the covering material CM. As illustrated in Fig. 7, the air supply control valve 185 connected to the air supply port 166 via the air supply pipe 184 is in the state where the passage open to the air is closed, and the exhaust control valve 182 connected to the exhaust port 114 via the exhaust pipe 181 is in the state where the passage connected to the vacuum pump 183 is open.

In this state, for example, when a user of the covering device 100 presses down the start switch 102, a signal is input from the start switch 102 to the control unit 190. For example, when the signal is input from the start switch 102, the control unit 190 outputs the signal to the solid state relay 186 to drive the vacuum pump 183 via the solid state relay 186. Consequently, air is discharged from the exhaust port 114, and the inside of the longitudinal hole 120 at which the covering material CM is arranged becomes a vacuum state, thereby allowing obtaining a vacuum state inside the covering material CM in which the content is housed.

Then, for example, the control unit 190 outputs a signal to the solid state relay 186 to stop the vacuum pump 183 and cause the exhaust control valve 182 to operate, thereby closing the passage connected to the vacuum pump 183 and opening the closed passage to maintain the vacuum state inside the longitudinal hole 120. After the end of the air exhaust step P2, for example, the control unit 190 performs the closing step P3 illustrated in Fig. 8.

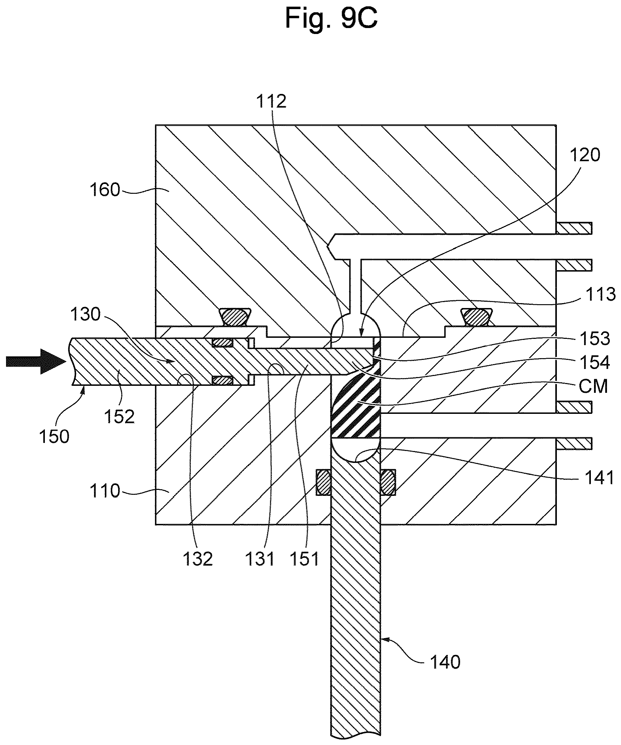

Fig. 9C is an enlarged cross-sectional view of the covering device 100 corresponding to Fig. 6 for describing the closing step P3 of Fig. 8. The closing step P3 is a step of driving the lateral shaft 150 toward the covering material CM in the state where the covering material CM is arranged in the longitudinal hole 120 and the content is housed in the covering material CM to compress and close the opening at the upper end of the covering material CM between the lateral shaft 150 and the inner wall of the longitudinal hole 120. When the closing step P3 is started, the control unit 190 outputs a signal to the motor driver 175 to drive the lateral actuator 171 via the motor driver 175, thereby driving the lateral shaft 150 toward the covering material CM.

Thus, the opening at the upper end of the covering material CM is compressed between the distal end of the lateral shaft 150 and the inner wall of the longitudinal hole 120, and the opening of the covering material CM is crushed and closed. Then, for example, the control unit 190 controls the lateral actuator 171 via the motor driver 175 to retreat the lateral shaft 150 toward the outside of the base portion 110. When the lateral shaft 150 retreats and the rear end contacts the lateral limit switch 173, a signal is output from the lateral limit switch 173 to the control unit 190.

When the signal is input from the lateral limit switch 173, the control unit 190 stops the driving of the lateral actuator 171 via the motor driver 175. Thus, the lateral shaft 150 returns to an initial position before the start of the closing step P3. After the end of the closing step P3, the control unit 190 performs, for example, the covering step P4.

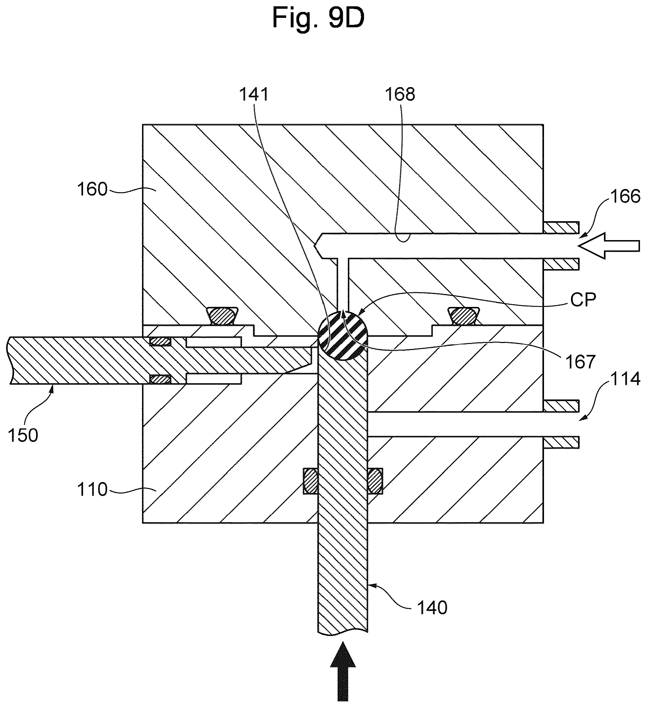

Fig. 9D is an enlarged cross-sectional view of the covering device 100 corresponding to Fig. 6 for describing the covering step P4 and the air supply step P5 of Fig. 8. The covering step P4 is a step of driving the longitudinal shaft 140 toward the covering material CM in the state where the opening of the covering material CM is closed to compress the covering material CM between the longitudinal shaft 140 and the upper lid portion 160 and envelop the content with the covering material CM. In the covering step P4, for example, the control unit 190 outputs a signal to the motor driver 175 to control the longitudinal actuator 172 via the motor driver 175, thereby driving the longitudinal shaft 140 toward the covering material CM.

Thus, the covering material CM in which the content is housed and the opening at the upper end is closed is compressed between the distal end of the longitudinal shaft 140 and the upper lid portion 160, and a covered object CP in which the content is enveloped with the covering material CM is produced. After the end of the covering step P4, the control unit 190 performs, for example, the air supply step P5. The air supply step P5 is a step of supplying air from the air supply port 166 opening at the outer surface of the upper lid portion 160 via the air supply passage 168 connecting the air supply port 166 and the air inlet 167 opening at the surface opposed to the longitudinal hole 120 of the upper lid portion 160.

In the air supply step P5, for example, the control unit 190 causes the air supply control valve 185 to operate via the solid state relay 186, thereby opening the passage open to the air. Thus, air is supplied to the longitudinal hole 120 from the air supply control valve 185 via the air supply pipe 184, the air supply port 166, the air supply passage 168, and the air inlet 167, and the vacuum state of the longitudinal hole 120 is released. Then, the user of the covering device 100 performs, for example, the extracting step P6.

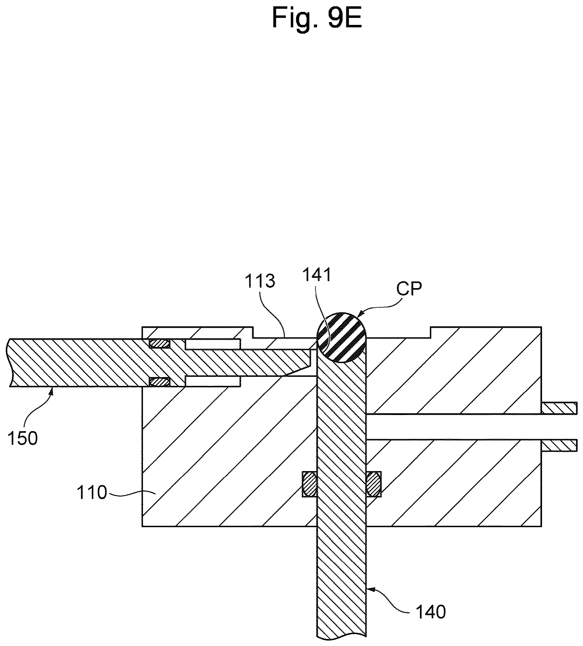

Fig. 9E is an enlarged cross-sectional view of the covering device 100 corresponding to Fig. 6 for describing the extracting step P6 of Fig. 8. In the extracting step P6, for example, as described above, the user of the covering device 100 releases the engagement of the stopper 161 of the upper lid portion 160 with the projection portion 111 of the base portion 110, and opens the upper lid portion 160 by turning the upper lid portion 160 around the hinge H while lifting the upper lid portion 160, thereby exposing the upper surface of the base portion 110.

Furthermore, for example, the user of the covering device 100 extracts the covered object CP exposed from the upper surface of the base portion 110 using tweezers. In this embodiment, for example, the control unit 190 maintains the position of the longitudinal shaft 140 after the covering step P4. Then, the user of the covering device 100 performs, for example, the reset step P7.

In the reset step P7, for example, when the user of the covering device 100 presses down the reset switch 103 disposed at the housing 101, a signal is output from the reset switch 103 to the control unit 190. For example, when the signal is input from the reset switch 103, the control unit 190 drives the longitudinal actuator 172 via the motor driver 175 to retreat the longitudinal shaft 140 downward.

When the longitudinal shaft 140 retreats and the rear end contacts the longitudinal limit switch 174, a signal is output from the longitudinal limit switch 174 to the control unit 190. When the signal is input from the longitudinal limit switch 174, the control unit 190 stops the driving of the longitudinal actuator 172 via the motor driver 175. Thus, the longitudinal shaft 140 returns to the initial position before performing the covering step P4.

For example, the control unit 190 causes the air supply control valve 185 to operate via the solid state relay 186, thereby closing the passage open to the air and opening the passage having the closed end portion. For example, the control unit 190 causes the exhaust control valve 182 to operate via the solid state relay 186, thereby closing the passage having the closed end portion and opening the passage connected to the vacuum pump 183. Thus, the intake and exhaust system 180 returns to the initial state before performing the air exhaust step P2. Thus, the reset step P7 is completed, and the processing flow of the producing method M for a covered object illustrated in Fig. 8 ends.

The following describes actions of the covering device 100 and the producing method M for a covered object of the embodiment.

The covering device 100 of the embodiment is a device that envelops a content with the container-shaped covering material CM having the opening at the upper end. The covering device 100 is provided with the base portion 110, the longitudinal hole 120 that penetrates the base portion 110 in the longitudinal direction, and the lateral hole 130 that penetrates the base portion 110 to the upper end portion of the longitudinal hole 120 in the lateral direction. The covering device 100 includes the longitudinal shaft 140 inserted into the longitudinal hole 120 from the lower side of the base portion 110, the lateral shaft 150 inserted into the lateral hole 130 from the side portion of the base portion 110, and the upper lid portion 160 that is placed on the base portion 110 and closes the upper end portion of the longitudinal hole 120. Furthermore, the covering device 100 includes the drive unit 170 that drives the lateral shaft 150 and the longitudinal shaft 140 in the respective axial directions.

With this configuration, the covering device 100 capable of quickly and easily enveloping the content with the covering material CM can be provided. In more detail, in the state where the content is housed in the container-shaped covering material CM having the opening at the upper end, the covering material CM is arranged at the upper end portion of the longitudinal hole 120 of the base portion 110, and the bottom portion of the covering material CM is opposed to the distal end of the longitudinal shaft 140. Next, the drive unit 170 axially drives the lateral shaft 150 toward the covering material CM arranged at the upper end portion of the longitudinal hole 120, the opening at the upper end of the covering material CM is crushed to be closed between the distal end portion 151 of the lateral shaft 150 and the inner wall of the longitudinal hole 120, and the drive unit 170 drives the lateral shaft 150 in the opposite direction to return the lateral shaft 150 to the original position.

This avoids getting out of the content housed in the covering material CM through the opening at the upper end when enveloping the content with the covering material CM. Furthermore, by axially driving the longitudinal shaft 140 toward the covering material CM with the drive unit 170 to compress the covering material CM in which the content is housed and the opening portion is closed between the distal end portion of the longitudinal shaft 140 and the upper lid portion 160, the content can be enveloped with the covering material CM. Accordingly, the embodiment can provide the covering device 100 capable of quickly and easily enveloping the content with the covering material CM by a simple device configuration.

In the covering device 100 of the embodiment, the lateral shaft 150 includes the distal end surface 153 parallel to the inner wall of the longitudinal hole 120 and the tapered portion 154 that is provided with the inclined surface at the lower end in the longitudinal direction and has a dimension in the longitudinal direction decreasing as approaching the distal end surface 153 in the lateral direction. That is, in the tapered portion 154, the distance between the lower end of the distal end surface 153 and the lower end of the lateral shaft 150 in the longitudinal direction decreases as approaching the distal end surface 153 in the lateral direction.

With this configuration, as illustrated in Fig. 9C, the opening at the upper end of the covering material CM can be crushed between the distal end surface 153 of the lateral shaft 150 and the inner wall of the longitudinal hole 120, which are parallel to one another, and the opening at the upper end of the covering material CM can be tightly closed without damaging the covering material CM. Since the lateral shaft 150 has the tapered portion 154, an amount of deformation of a part in the lower side of the closed part of the covering material CM can be gradually changed to avoid concentration of stress, thereby allowing the damage of the covering material CM to be avoided with more certainty.

In the covering device 100 of the embodiment, the longitudinal shaft 140 is provided with the recessed portion 141 at the distal end opposed to the covering material CM.

This allows forming the covering material CM in the shape of the recessed portion 141 in the covering step P4. For example, as illustrated in Fig. 9D, the recessed portion 141 having the hemispherical shape allows forming the lower half of the covered object CP in the hemispherical shape. The formed covered object CP can be held by the recessed portion 141.

The covering device 100 of the embodiment includes, as described above, the exhaust port 114 that is open at the outer surface of the base portion 110 and connected to the vacuum pump 183, the exhaust outlet 121 opening at the inner wall of the longitudinal hole 120, and the exhaust passage 115 that connects the exhaust port 114 and the exhaust outlet 121.

With this configuration, as described above, by driving the vacuum pump 183 to make the inside of the longitudinal hole 120 the vacuum state via the exhaust port 114, the exhaust passage 115, and the exhaust outlet 121, the inside of the covering material CM before closing the opening at the upper end can be made the vacuum state. Therefore, when enveloping the content with the covering material CM by compressing the covering material CM having the closed opening at the upper end between the distal end of the longitudinal shaft 140 and the upper lid portion 160, air entering inside the covering material CM can be avoided.

In the covering device 100 of the embodiment, the exhaust outlet 121 opening at the inner wall of the longitudinal hole 120 is provided at the position above the distal end of the longitudinal shaft 140 and below the opening of the covering material CM in the state where the covering material CM is arranged in the longitudinal hole 120 and the distal end of the longitudinal shaft 140 is opposed to the lower end of the covering material CM.

With this configuration, when air is discharged from the longitudinal hole 120 via the exhaust outlet 121, it can be avoided that the content housed in the covering material CM is sucked up or sucked into the exhaust outlet 121. This allows avoiding contamination of the covering device 100 due to the content housed in the covering material CM.

The covering device 100 of the embodiment includes, as described above, the air supply port 166 opening at the outer surface of the upper lid portion 160, the air inlet 167 opening at the surface opposed to the longitudinal hole 120 of the upper lid portion 160, and the air supply passage 168 that connects the air supply port 166 and the air inlet 167.

With this configuration, after the production of the covered object CP in which the content is enveloped with the covering material CM, air can be supplied to the longitudinal hole 120 from the air supply port 166 via the air supply passage 168 and the air inlet 167, thereby releasing the vacuum state of the longitudinal hole 120. With the air passing between the covered object CP and the upper lid portion 160, attachment of the covered object CP to the upper lid portion 160 when the upper lid portion 160 is opened can be avoided.

In the covering device 100 of the embodiment, the base portion 110 is provided with the outer periphery support surface 112 that supports the outer peripheral surface of the upper end of the covering material CM between the opening at the upper end of the longitudinal hole 120 and the opening of the lateral hole 130 at the inner wall of the longitudinal hole 120.

With this configuration, as illustrated in Fig. 9C, when crushing and closing the opening at the upper end of the covering material CM between the lateral shaft 150 and the inner wall of the longitudinal hole 120, the upper end portion of the covering material CM positioned above the distal end portion 151 of the lateral shaft 150 is supported by the outer periphery support surface 112 therearound. This allows avoiding generation of burr at the upper end of the covering material CM having the closed opening.

In the covering device 100 of the embodiment, the exhaust outlet 121 is provided below the distal end surface 153 of the lateral shaft 150 in contact with the inner wall of the longitudinal hole 120 in the longitudinal direction.

With this configuration, as illustrated in Fig. 9C, when crushing and closing the opening at the upper end of the covering material CM between the lateral shaft 150 and the inner wall of the longitudinal hole 120, it can be avoided that the covering material CM is pushed into the exhaust outlet 121. This avoids the covering material CM to be caught at the exhaust outlet 121 when driving the longitudinal shaft 140 upward to compress the covering material CM, thus allowing avoidance of the damage of the covering material CM.

In the covering device 100 of the embodiment, the base portion 110 is provided with the recessed portion 113 at the surface opposed to the upper lid portion 160. The opening at the upper end of the longitudinal hole 120 is open at the bottom surface of the recessed portion 113.

With this configuration, by adjusting a depth of the recessed portion 113, the height of the outer periphery support surface 112 at the upper end of the longitudinal hole 120 can be easily adjusted. This allows the adjustment of the height of the outer periphery support surface 112 to a height at which the generation of burr at the upper end of the covering material CM having the closed opening can be most effectively avoided. Further, when extracting the produced covered object CP from the longitudinal hole 120, the recessed portion 113 allows the covered object CP to avoid falling from the upper surface of the base portion 110.

In the covering device 100 of the embodiment, the distal end portion 151 of the lateral shaft 150 opposed to the covering material CM has the dimension in the longitudinal direction smaller than the dimension in the longitudinal direction of the base end portion 152 of the lateral shaft 150 in the opposite side of the distal end portion 151. The distal end portion 131 of the lateral hole 130 through which the distal end portion 151 of the lateral shaft 150 is inserted has the dimension in the longitudinal direction smaller than the dimension in the longitudinal direction of the base end portion 132 of the lateral hole 130 through which the base end portion 152 of the lateral shaft 150 is inserted.

With this configuration, while the mechanical strength of the base end portion 152 of the lateral shaft 150 is ensured, the dimension of the distal end portion 151 of the lateral shaft 150 can be provided as a dimension appropriate for closing the opening at the upper end of the covering material CM. When the base portion 110 is provided with the recessed portion 113, the distal end portion 131 of the lateral hole 130 is opened at the inner wall of the longitudinal hole 120 in the lower side with respect to the bottom surface of the recessed portion 113, thereby allowing ensuring the sufficient height of the outer periphery support surface 112.

In the covering device 100 of the embodiment, the upper lid portion 160 is provided with the upper lid recessed portion 164 at the surface opposed to the base portion 110. The air inlet 167 is open at the bottom portion of the upper lid recessed portion 164.

With this configuration, as illustrated in Fig. 9D, the upper half of the covering material CM can be formed in the shape of the upper lid recessed portion 164. For example, the upper lid recessed portion 164 having the hemispherical shape allows forming the upper half of the covered object CP in a hemispherical shape and forming the covered object CP in a spherical shape together with the recessed portion 141 having the hemispherical shape of the distal end of the longitudinal shaft 140. Therefore, for example, it can be avoided that the covered object CP is caught or clogged in the pipe when the covered object CP is put in an elemental analyzer. By supplying air from the air inlet 167 opening at the bottom portion of the upper lid recessed portion 164 to the longitudinal hole 120 in the vacuum state, attachment of the covered object CP to the upper lid recessed portion 164 can be avoided. Therefore, it can be avoided that the covered object CP attached to the upper lid portion 160 drops and rolls down.

The covering device 100 of the embodiment further includes the control unit 190 that controls the drive unit 170. The control unit 190 controls the drive unit 170 in a manner of driving the lateral shaft 150 toward the covering material CM in a state where the covering material CM is arranged in the longitudinal hole 120 and the content is housed in the covering material CM to compress and close the opening of the covering material CM between the lateral shaft 150 and the inner wall of the longitudinal hole 120. The control unit 190 controls the drive unit 170 in a manner of driving the longitudinal shaft 140 toward the covering material CM in a state where the opening of the covering material CM is closed to compress the covering material CM between the longitudinal shaft 140 and the upper lid portion 160 and envelop the content with the covering material CM.

With this configuration, the operation of driving the lateral shaft 150 to close the opening at the upper end of the covering material CM in which the content is housed and further driving the longitudinal shaft 140 to compress the covering material CM and envelop the content with the covering material CM can be automatically performed. Therefore, according to the covering device 100 of the embodiment, the content can be quickly and easily enveloped with the covering material CM.

The covering device 100 of the embodiment includes the vacuum pump 183 connected to the exhaust port 114 and the housing 101 that houses the vacuum pump 183 and supports the base portion 110.

With this configuration, the vacuum pump 183 can be housed in the housing 101, thereby allowing the reduction in size of the covering device 100. By supporting the base portion 110 with the housing 101, the respective configurations of the covering device 100 can be integrated, thereby facilitating the carry. Providing the outlet 104, the port 105, and the inlet 106 to the housing 101 allows the vacuum pump 183 to be externally disposed, thereby ensuring the degree of freedom of the device configuration.

The producing method M for a covered object of the embodiment is a producing method for the covered object CP in which a content is enveloped with the covering material CM using the covering device 100, and includes the closing step P3 and the covering step P4. The closing step P3 is a step of driving the lateral shaft 150 toward the covering material CM in the state where the covering material CM is arranged in the longitudinal hole 120 and the content is housed in the covering material CM to compress and close the opening of the covering material CM between the lateral shaft 150 and the inner wall of the longitudinal hole 120. The covering step P4 is a step of driving the longitudinal shaft 140 toward the covering material CM in the state where the opening of the covering material CM is closed to compress the covering material CM between the longitudinal shaft 140 and the upper lid portion 160 and envelop the content with the covering material CM.

With this configuration, the producing method M for a covered object capable of quickly and easily enveloping the content with the covering material CM can be provided. In more detail, in the state where the content is housed in the container-shaped covering material CM having the opening at the upper end, the covering material CM is arranged at the upper end portion of the longitudinal hole 120 of the base portion 110, and the bottom portion of the covering material CM is opposed to the distal end of the longitudinal shaft 140.

Then, in the closing step P3, the drive unit 170 axially drives the lateral shaft 150 toward the covering material CM arranged at the upper end portion of the longitudinal hole 120, the opening at the upper end of the covering material CM is crushed to be closed between the distal end portion 151 of the lateral shaft 150 and the inner wall of the longitudinal hole 120, and the drive unit 170 drives the lateral shaft 150 in the opposite direction to return the lateral shaft 150 to the original position.

Next, in the covering step P4, by axially driving the longitudinal shaft 140 toward the covering material CM with the drive unit 170 to compress the covering material CM in which the content is housed and the opening portion is closed between the distal end portion of the longitudinal shaft 140 and the upper lid portion 160, the content can be enveloped with the covering material CM. Therefore, according to the embodiment, the producing method M for a covered object capable of quickly and easily enveloping the content with the covering material CM can be provided.

The producing method M for a covered object of the embodiment further includes the air exhaust step P2 of exhausting air from the exhaust port 114 opening at the outer surface of the base portion 110 via the exhaust passage 115 connecting the exhaust port 114 and the exhaust outlet 121 opening at the inner wall of the longitudinal hole 120 before the closing step P3.

Thus, by performing the air exhaust step P2 before the closing step P3, in the closing step P3, the opening of the covering material CM can be closed in the state where the air inside the covering material CM in which the content is housed is discharged. Therefore, when enveloping the content with the covering material CM by compressing the covering material CM having the closed opening at the upper end between the distal end of the longitudinal shaft 140 and the upper lid portion 160, air entering inside the covering material CM can be avoided.

The producing method M for a covered object of the embodiment further includes the air supply step P5 of supplying air from the air supply port 166 opening at the outer surface of the upper lid portion 160 via the air supply passage 168 connecting the air supply port 166 and the air inlet 167 opening at the surface opposed to the longitudinal hole 120 of the upper lid portion 160, after the covering step P4.

With this configuration, after the production of the covered object CP in which the content is enveloped with the covering material CM, air can be supplied to the longitudinal hole 120 from the air supply port 166 via the air supply passage 168 and the air inlet 167, thereby releasing the vacuum state of the longitudinal hole 120. With the air passing between the covered object CP and the upper lid portion 160, attachment of the covered object CP to the upper lid portion 160 when the upper lid portion 160 is opened can be avoided.

The producing method M for a covered object of the embodiment maintains the position of the longitudinal shaft 140 after the covering step P4. Therefore, the covered object CP is supported from the lower side by the distal end of the longitudinal shaft 140, and the covered object CP can be easily extracted from the longitudinal hole 120 opening at the upper surface of the base portion 110.

As described above, the embodiment can provide the covering device 100 capable of quickly and easily enveloping the content with the covering material CM and the producing method M for a covered object using the covering device 100.

Subsequently, another embodiment of the covering device according to the disclosure is described. For configurations similar to those in the above-described embodiment, the same reference numerals are used and the explanation is omitted.

Fig. 10 is a front view illustrating another embodiment of the covering device according to the disclosure.

A covering device 200 of the embodiment includes, for example, a washing mechanism 210 that can easily wash inside the covering device 200 even when the content enters inside the covering device 200 for some reason, for example when the content leaks out from the covering material CM to the inside of the covering device 200 during the production of the covered object.

The covering device 200 illustrated in Fig. 10 is different from the covering device 100 illustrated in Fig. 1 mainly in that a start switch 203 for the vacuum pump 183 and the washing mechanism 210 are added. The producing method M using the covering device 100 illustrated in Fig. 1 does not include a washing step P23 described below. Therefore, the covering device 100 illustrated in Fig. 1 does not need to include the start switch for the vacuum pump 183 as a single body. However, in this embodiment, a vacuum drawing function of the vacuum pump 183 is utilized to wash the inside of the covering device 200. Accordingly, the covering device 200 illustrated in Fig. 10 includes the start switch 203 that activates the vacuum pump 183 independently.

When the start switch 203 of the vacuum pump 183 is directly added to the covering device 100 illustrated in Fig. 1, the number of switches increases, thus leading to the increase in cost. Therefore, the covering device 200 illustrated in Fig. 10 includes a switch 202 having functions of both the start switch 102 and the reset switch 103 instead of the start switch 102 and the reset switch 103, thereby suppressing the increase of the number of switches. When the switch 202 is pressed down once, the covering device 200 starts the production of the covered object, performs from the air exhaust step P2 to the air supply step P5 illustrated in Fig. 8, and then stops (first operation). When the switch 202 is pressed down again, the covering device 200 performs the reset step P7 in which the longitudinal shaft 140 returns to the initial position (second operation). The switch 202 and the start switch 203 may be disposed at the front side of the housing 101.

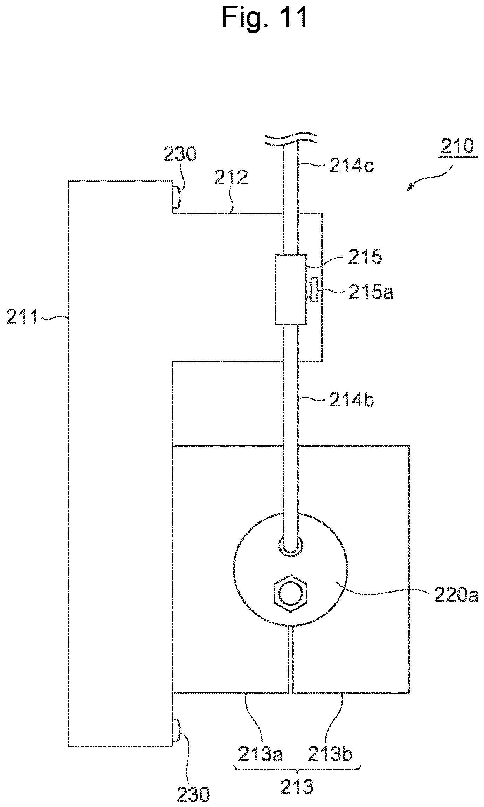

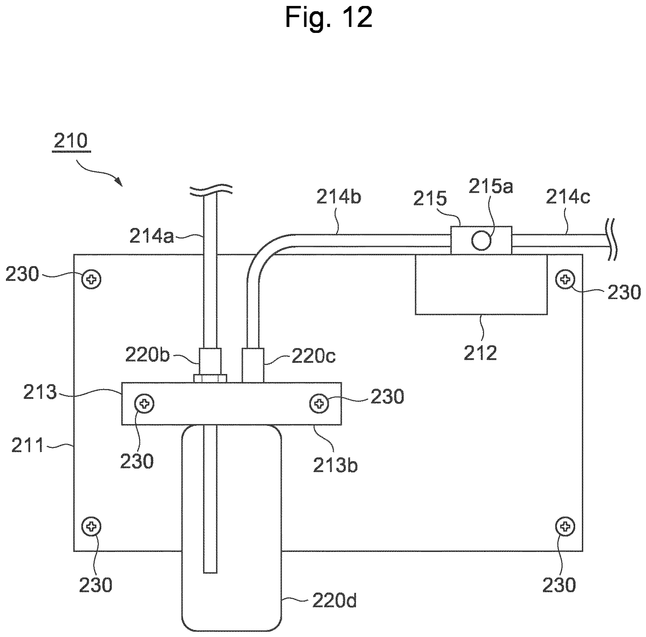

Fig. 11 is a top view of the washing mechanism 210 when viewed in a direction A of Fig. 10. Fig. 12 is a side view of the washing mechanism 210 when viewed in a direction B of Fig. 10. The direction A illustrated in Fig. 10 is a direction from the upper surface side of the covering device 200 toward the washing mechanism 210. The direction B illustrated in Fig. 10 is a direction from the side surface side of the covering device 200 toward the washing mechanism 210.

The washing mechanism 210 mainly includes a base portion 211 connected to a side surface of the housing 101 of the covering device 200, a trap portion 220 that traps a washing fluid and the like used in the washing step P23, tubes 214a to 214c connecting the vacuum pump 183 or the exhaust port 114 and the trap portion 220, a speed controller 215 that controls an exhaust speed in vacuum drawing, a trap holder 213 that is supported by the base portion 211 and holds the trap portion 220, and a protruding portion 212 that protrudes from the base portion 211 and holds the speed controller 215.

In this embodiment, the base portion 211 is formed in a plate shape along a side surface of the housing 101. The base portion 211 is connected to the side surface of the housing 101 with screws 230. The protruding portion 212 is formed in a plate shape projecting from a surface of an upper portion of the base portion 211 along a normal direction of the surface. The trap holder 213 is formed in a plate shape projecting from a surface of a center portion of the base portion 211 along a normal direction of the surface.

While the base portion 211, the protruding portion 212, and the trap holder 213 are preferably integrally formed from an aspect of installation of the washing mechanism 210, it is not specifically limited. In this embodiment, the base portion 211 and the protruding portion 212 are integrally formed. In this embodiment, as illustrated in Fig. 11, the trap holder 213 is formed as a separate body, such as a base portion side member 213a and a sandwiching member 213b. The base portion side member 213a and the sandwiching member 213b are connected to be integrated with one another with the screws 230. The base portion side member 213a and the sandwiching member 213b may be connected to one another with a hinge member or the like.

The trap portion 220 includes a lid portion 220a, an introduction port 220b, a lead-out port 220c, and a bottle 220d. The trap portion 220 accumulates the trapped washing fluid and the like inside the bottle 220d with an opening at an upper end sealed by the screw-type lid portion 220a. In this embodiment, the lid portion 220a is sandwiched between the base portion side member 213a and the sandwiching member 213b of the trap holder 213. This allows removal of only the bottle 220d to dispose the washing fluid and the like when the washing fluid and the like are accumulated in the bottle 220d. As a result, the maintainability of the covering device 200 improves.

The lid portion 220a is provided with the introduction port 220b for introducing the washing fluid and the like to the inside of the bottle 220d. The tube 214a connected to the exhaust port 114 is inserted through the introduction port 220b to reach the inside of the bottle 220d. The lid portion 220a is provided with the lead-out port 220c that leads out a gas inside a bottle 200d to the outside of the bottle 200d. The tubes 214b, 214c connected to the vacuum pump 183 are inserted through the lead-out port 220c. Between the tube 214b and the tube 214c, the speed controller 215 with a valve 215a for controlling the exhaust speed is disposed. The speed controller 215 is secured to an upper surface of the protruding portion 212.

The configuration of the washing mechanism 210 is described above. The washing mechanism 210 is removably attached to the side surface of the housing 101 of the covering device 200, and has the configuration that allows anyone to easily wash inside the covering device 200. In this embodiment, the washing mechanism 210 is attached with the screws 230. For the attachment means of the washing mechanism 210, it is needless to say that not only the screw 230, but also publicly known means (such as an adhesive) can be used.

In this embodiment, the washing mechanism 210 is attached to the side surface of the housing 101 of the covering device 200. The attachment position of the washing mechanism 210 is not specifically limited insofar as it is a position at which the washing mechanism 210 is easily handled and a position not interfering with other members of the covering device 200. However, the switch 202 and the start switch 203 are disposed at the front side of the housing 101, and an outlet 104 for the vacuum pump, the vacuum drawing port 105, and an inlet 106 for an external power supply are provided at a back surface of the housing 101. Therefore, the attachment position of the washing mechanism 210 is preferably the side surface of the housing 101 in consideration of workability.

Next, with reference to Fig. 13, a washing method W for the covering device 200 of the embodiment is described. Fig. 13 is a flowchart illustrating an embodiment of a washing method for the covering device according to the disclosure. The washing method W for the covering device 200 of the embodiment is a method for washing inside the covering device 200 using the above-described washing mechanism 210.

The washing method W for the covering device 200 of the embodiment includes, as illustrated in Fig. 13, an opening step P21, a washing fluid injecting step P22, a washing step P23, and a reset step P24.

In the washing method W, first, the opening step P21 is performed. The opening step P21 is a step of opening the upper lid portion 160 of the covering device 200 to open the longitudinal hole 120.

After the opening step P21, in the washing method W, the washing fluid injecting step P22 is performed. The washing fluid injecting step P22 is a step of injecting the washing fluid into the longitudinal hole 120 using a wash bottle or the like. The washing fluid is, for example, ethanol or ultrapure water, and a publicly known washing fluid appropriate for the content can be used. From the aspect of maintenance, the washing fluid is preferably a quick-drying washing fluid, such as alcohol. When the washing fluid is ultrapure water, the washing fluid needs to be sufficiently dried using publicly known blowing means, such as a fan.

After the washing fluid injecting step P22, in the washing method W, the washing step P23 is performed. The washing step P23 is a step of activating the vacuum pump 183 by pressing down the start switch 203 of the vacuum pump 183 and performing vacuum drawing for a predetermined time. In the washing step P23, the washing fluid can be added to more carefully wash the part for producing the covered object as illustrated in Fig. 6.

After washing the part for producing the covered object, the start switch 203 of the vacuum pump 183 is pressed down to stop the vacuum pump 183, thus ending the washing step P23. In the washing method W, the reset step P24 is performed as necessary. The reset step P24 is a step of returning the longitudinal shaft 140 and the like to the initial position so as to allow the execution of the producing method M for the covered object illustrated in Fig. 8 when the switch 202 is pressed down. Since the washing step P23 is performed in the state where the upper lid portion 160 illustrated in Fig. 6 is open and the state where the washing fluid can be discharged via the exhaust port 114, usually, the respective shafts are at the initial positions and the reset step P24 is not necessary, but for example, when the position of the longitudinal shaft 140 is not the initial position, the switch 202 is pressed down to perform the reset step P24. Thus, the reset step P24 is completed, and the processing flow of the washing method W for the covering device 200 illustrated in Fig. 13 ends.

In the washing method W, since the vacuum pump 183 operates for a certain period of time after discharging the washing fluid, the vacuum pump 183 can not only discharge the washing fluid but also dry the inside of the covering device 200.

As described above, the covering device 200 performs the first operation (performs from the air exhaust step P2 to the air supply step P5 illustrated in Fig. 8 and stops) when the switch 202 is pressed down once, and performs the second operation (performs the reset step P7 illustrated in Fig. 8) when the switch 202 is pressed down again. However, the covering device 200 may perform a third operation between the first operation and the second operation. The third operation is an operation of driving the longitudinal shaft 140 until the recessed portion 141 at the distal end of the longitudinal shaft 140 projects upward from the longitudinal hole 120 and holding the longitudinal shaft 140 to be static for a predetermined time.

In the producing method M for a covered object, adding the third operation facilitates extracting the produced covered object CP, and allows cleaning the part projecting from the longitudinal hole 120 of the longitudinal shaft 140 by wiping.

When the third operation is added in the producing method M, the covering device 200 performs the first operation when the switch 202 is pressed down once, performs the third operation when the switch 202 is pressed down again, and performs the second operation when the switch 202 is pressed down one more time.

In the washing method W of the covering device 200, the third operation may be added between the washing step P23 and the reset step P24. This allows the washing method W to promote drying of the longitudinal shaft 140.

When the third operation is added in the washing method W, the start switch 203 of the vacuum pump 183 is pressed down and the vacuum pump 183 stops, and then the switch 202 is pressed down after the washing step P23 is a completed, thus the covering device 200 performs the third operation. Then, the switch 202 is pressed down to return the longitudinal shaft 140 projecting from the longitudinal hole 120 to the initial position, and thus the reset step P24 is performed.

In this embodiment, it is important that by using the vacuum pump 183 as one component of the covering device 200 that produces the covered object CP for washing the covering device 200, the user can easily wash the covering device 200 without adding a large number of components to the washing mechanism 210.

Then, since the covering device 200 can be internally washed without a large-scale maintenance, for example, removal of a part of components, the maintainability can be tremendously improved.

Since the washing mechanism 210 has a simple structure in which the trap portion 220 is interposed between the exhaust port 114 and the vacuum pump 183, in the covering device 200, it is not necessary to remove the washing mechanism 210 itself during the performance of the producing method M for a covered object. Accordingly, the covering device 200 has a structure without any problem on the function for producing a covered object as the original function.

While the embodiments of the covering device, the producing method for the covered object, and a washing method for the covering device according to the disclosure are described above in detail with reference to the drawings, the specific configurations are not limited to the embodiments, and design changes and the like within a scope not departing from the gist of the disclosure are included in the disclosure.

For example, by providing a plurality of base portions, longitudinal holes, lateral holes, longitudinal shafts, lateral shafts, upper lid portions, and drive units to one housing, a plurality of covered objects can be simultaneously produced. The start switch and the reset switch may be provided to be in common. In this case, the control unit may be configured to start the production of a covered object by pressing down of the switch for the first time and perform the reset operation of retreating the longitudinal shaft to the initial position downward by pressing down of the switch for the second time. Further, it is needless to say that the covering device according to this disclosure is applicable to a technical field that requires highly efficiently covering a content other than a material subjected to the elemental analysis.

### Reference Signs List

- 100: Covering device
- 101: Housing
- 110: Base portion
- 112: Outer periphery support surface
- 113: Recessed portion
- 114: Exhaust port
- 115: Exhaust passage
- 120: Longitudinal hole
- 121: Exhaust outlet
- 130: Lateral hole
- 131: Distal end portion
- 132: Base end portion
- 140: Longitudinal shaft
- 141: Recessed portion
- 150: Lateral shaft
- 151: Distal end portion
- 152: Base end portion
- 153: Distal end surface
- 154: Tapered portion
- 160: Upper lid portion
- 164: Upper lid recessed portion
- 166: Air supply port
- 167: Air inlet
- 168: Air supply passage
- 170: Drive unit
- 183: Vacuum pump
- 184: Air supply pipe
- 190: Control unit
- 200: Covering device
- 210: Washing mechanism
- CM: Covering material
- CP: Covered object
- M: Producing method for covered object
- P2: Air exhaust step
- P3: Closing step
- P4: Covering step
- P5: Air supply step
- W: Washing method for covering device

## Claims

1. A covering device that envelops a content with a container-shaped covering material having an opening at an upper end, comprising:
a base portion;
a longitudinal hole that penetrates the base portion in a longitudinal direction;
a lateral hole that penetrates the base portion to an upper end portion of the longitudinal hole in a lateral direction;
a longitudinal shaft inserted into the longitudinal hole from a lower side of the base portion;
a lateral shaft inserted into the lateral hole from a side portion of the base portion;
an upper lid portion placed on the base portion to close the upper end portion of the longitudinal hole; and
a drive unit that drives the lateral shaft and the longitudinal shaft in respective axial directions.

2. The covering device according to claim 1,
wherein the lateral shaft includes a distal end surface parallel to an inner wall of the longitudinal hole, and a tapered portion that is provided with an inclined surface at a lower end in the longitudinal direction and has a dimension in the longitudinal direction decreasing as approaching the distal end surface in the lateral direction.

3. The covering device according to claim 1,
wherein the longitudinal shaft has a distal end with a recessed portion opposed to the covering material.

4. The covering device according to claim 1, further comprising:
an exhaust port opening at an outer surface of the base portion and connected to a vacuum pump;
an exhaust outlet opening at an inner wall of the longitudinal hole; and
an exhaust passage that connects the exhaust port and the exhaust outlet.

5. The covering device according to claim 4,
wherein the exhaust outlet is provided at a position above a distal end of the longitudinal shaft and below the opening of the covering material in a state where the covering material is arranged in the longitudinal hole and the distal end of the longitudinal shaft is opposed to a lower end of the covering material CM.

6. The covering device according to claim 4, further comprising:
an air supply port opening at an outer surface of the upper lid portion;
an air inlet opening at a surface opposed to the longitudinal hole of the upper lid portion; and
an air supply passage that connects the air supply port and the air inlet.

7. The covering device according to claim 4,
wherein the exhaust outlet is provided below a distal end surface of the lateral shaft in contact with an inner wall of the longitudinal hole in the longitudinal direction.

8. The covering device according to claim 1,
wherein the base portion is provided with an outer periphery support surface that supports an outer peripheral surface of the upper end of the covering material between an opening at an upper end of the longitudinal hole and an opening of the lateral hole at an inner wall of the longitudinal hole.

9. The covering device according to claim 8,
wherein the base portion is provided with a recessed portion at a surface opposed to the upper lid portion, and
wherein the opening at the upper end of the longitudinal hole is open at a bottom surface of the recessed portion.

10. The covering device according to claim 8,
wherein a distal end portion of the lateral shaft opposed to the covering material has a dimension in the longitudinal direction smaller than a dimension in the longitudinal direction of a base end portion of the lateral shaft in an opposite side of the distal end portion, and a distal end portion of the lateral hole through which the distal end portion of the lateral shaft is inserted has a dimension in the longitudinal direction smaller than a dimension in the longitudinal direction of a base end portion of the lateral hole through which the base end portion of the lateral shaft is inserted.

11. The covering device according to claim 6,
wherein the upper lid portion is provided with an upper lid recessed portion at a surface opposed to the base portion, and
wherein the air inlet is open at a bottom portion of the upper lid recessed portion.

12. The covering device according to claim 1, further comprising
a control unit that controls the drive unit,
wherein the control unit controls the drive unit in a manner of driving the lateral shaft toward the covering material in a state where the covering material is arranged in the longitudinal hole and the content is housed in the covering material to compress and close the opening of the covering material between the lateral shaft and an inner wall of the longitudinal hole, and controls the drive unit in a manner of driving the longitudinal shaft toward the covering material in a state where the opening of the covering material is closed to compress the covering material between the longitudinal shaft and the upper lid portion and envelop the content with the covering material.

13. The covering device according to claim 4, further comprising:
a vacuum pump connected to the exhaust port; and
a housing that houses the vacuum pump and supports the base portion.

14. A producing method for the covered object in which the content is enveloped with the covering material using the covering device according to claim 1, the method comprising:
a closing step of driving the lateral shaft toward the covering material in a state where the covering material is arranged in the longitudinal hole and the content is housed in the covering material to compress and close the opening of the covering material between the lateral shaft and an inner wall of the longitudinal hole; and
a covering step of driving the longitudinal shaft toward the covering material in a state where the opening of the covering material is closed to compress the covering material between the longitudinal shaft and the upper lid portion and envelop the content with the covering material.

15. The producing method for the covered object according to claim 14, further comprising
an air exhaust step of exhausting air from an exhaust port opening at an outer surface of the base portion via an exhaust passage connecting the exhaust port and an exhaust outlet opening at the inner wall of the longitudinal hole before the closing step.

16. The producing method for the covered object according to claim 14, further comprising
an air supply step of supplying air from an air supply port opening at an outer surface of the upper lid portion via an air supply passage connecting the air supply port and an air inlet opening at a surface opposed to the longitudinal hole of the upper lid portion after the covering step.

17. The producing method for the covered object according to claim 14,
wherein a position of the longitudinal shaft is maintained after the covering step.
